# EUROPÄISCHE PATENTSCHRIFT

(11) **EP 0 926 038 B1**
(45) Veröffentlichungstag und Bekanntmachung des Hinweises auf die Patenterteilung: **04.07.2001**
(21) Anmeldenummer: 98123346.3
(22) Anmeldetag: 08.12.1998
(51) Int. Cl.: B62D 1/04

(54) **Lenkrad**
Steering wheel
Volant

(30) Priorität: 18.12.1997 DE 19756482
(43) Veröffentlichungstag der Anmeldung: 30.06.1999
(73) Patentinhaber: Bayerische Motoren Werke Aktiengesellschaft, 80788 München (DE)
(72) Erfinder: Faulstroh, Hans-Joachim, 86511 Schmiechen (DE)

(56) Entgegenhaltungen:
- EP-A- 0 414 300
- EP-A- 0 795 456
- DE-B- 2 853 977
- FR-A- 2 157 283

## Beschreibung

Die Erfindung betrifft ein Lenkrad, mit den im Oberbegriff des Patentanspruches 1 angegebenen Merkmalen.

In der DE-AS 28 53 977 ist ein an einem Kraftfahrzeug verwendetes Lenkrad gezeigt, welches zur Einstellung des Lenkrad-Trägheitsmoments um die Lenkradachse eine Zusatzmasse aufweist, die im unteren Bereich des Lenkradkranzes angeordnet ist. Die Zusatzmasse kann durch eine Ummantelung aus Eisen gebildet sein, die einen unteren Bereich des Lenkradkranzes umgibt. Bei einer anderen Ausführung sind der Lenkradkranz und/oder die Speichen rohrförmig gefertigt und die Zusatzmasse durch Blei gebildet, das nach einer Erwärmung flüssig in den Hohlraum des Lenkradkranzes und/oder die Speichen eingefüllt wird. Das Blei füllt den Hohlraum des Lenkradkranzes nicht vollständig aus, sondern sammelt sich im unteren Bereich des in Normalstellung befindlichen Lenkrades an. Bei allen Ausführungen befindet sich der Schwerpunkt des Lenkrades in Geradeausstellung unterhalb der Lenkradachse, wodurch ein Rücklauf des ausgelenkten Lenkrades in die Normalstellung und eine Verringerung von Drehstößen und Drehschwingungen am Lenkrad erreicht werden soll. Das Anbringen der Zusatzmasse ist jedoch aufwendig und das Einstellen eines angestrebten Lenkrad-Trägheitsmoments mit einer vorgegebenen, beispielsweise symmetrischen Massenverteilung um die Lenkradachse ist zumindest erschwert.

Ein Lenkrad mit den Merkmalen des Oberbegriffs des Anspruchs 1 ist in der EP 0 795 456 A2 gezeigt. Hiermit ist zwar ein einfaches Anbringen der Zusatzmasse möglich, jedoch wäre eine größere Flexibilität wünschenswert, d.h. das gewünschte Lenkrad-Trägheitsmoment sollte noch genauer einstellbar sein.

Hierfür Maßnahmen aufzuzeigen, ist Aufgabe der vorliegenden Erfindung.
Diese Aufgabe ist durch die im Patentanspruch 1 angegebenen Merkmale gelöst. Vorteilhafte Ausgestaltungen der Erfindung sind den Unteransprüchen entnehmbar.

Am Lenkradkranz des Lenkrades ist nicht nur eine, sondern es sind mehrere Ausnehmung ausgebildet, in die jeweils eine Zusatzmasse eingebracht und darin befestigt werden kann. Diese mehreren Ausnehmungen können in unterschiedlichen oder gleichen Abständen voneinander angeordnet sein und eine gleiche oder unterschiedliche Größe aufweisen. Somit kann in eine beliebige im Hinblick auf die Einstellung des Lenkrad-Trägheitsmomentes günstige Ausnehmung oder auch in mehrere Ausnehmungen (jeweils) eine Zusatzmasse eingebracht werden, die eine vorgebbare Größe aufweisen kann und die betreffende Ausnehmung ganz oder teilweise ausfüllt, um das Lenkrad-Trägheitsmoment auf einen gewünschten Wert einzustellen. Vorzugsweise wird in die Ausnehmung ein flüssiges Metall in einer vorgegebenen Menge eingefüllt, die bei einer entsprechenden Formgestaltung der Ausnehmung nach dem Abkühlen der Zusatzmasse in der Ausnehmung festgehalten ist. Ein Festhalten der Zusatzmasse in der bei unverkleidetem Lenkrad nach außen offenen Ausnehmung kann über eine entsprechende Gestaltung der Innenwände der Ausnehmung erreicht werden. Beispielsweise kann wenigstens eine Innenwand Vertiefungen aufweisen, die durch Rippen und/oder eine Riffelung oder dergleichen gebildet sind. Die Öffnung der Ausnehmung kann in eine beliebige Richtung ausgebildet sein. Dabei können die mehreren Ausnehmungen in unterschiedliche Richtungen offen ausgebildet sein. Vorzugsweise sind die Öffnungen der Ausnehmungen lediglich nach einer Richtung oder nach zwei entgegengesetzten Richtungen ausgebildet.

Ein Ausführungsbeispiel der Erfindung wird anhand einer Zeichnung näher erläutert. Es zeigen
- Fig. 1: eine perspektivische Teilansicht von dem unverkleideten Lenkrad und
- Fig. 2: einen Ausschnitt des Lenkradkranzes beim Einfüllen einer flüssigen Zusatzmasse in eine Ausnehmung des Lenkradkranzes.

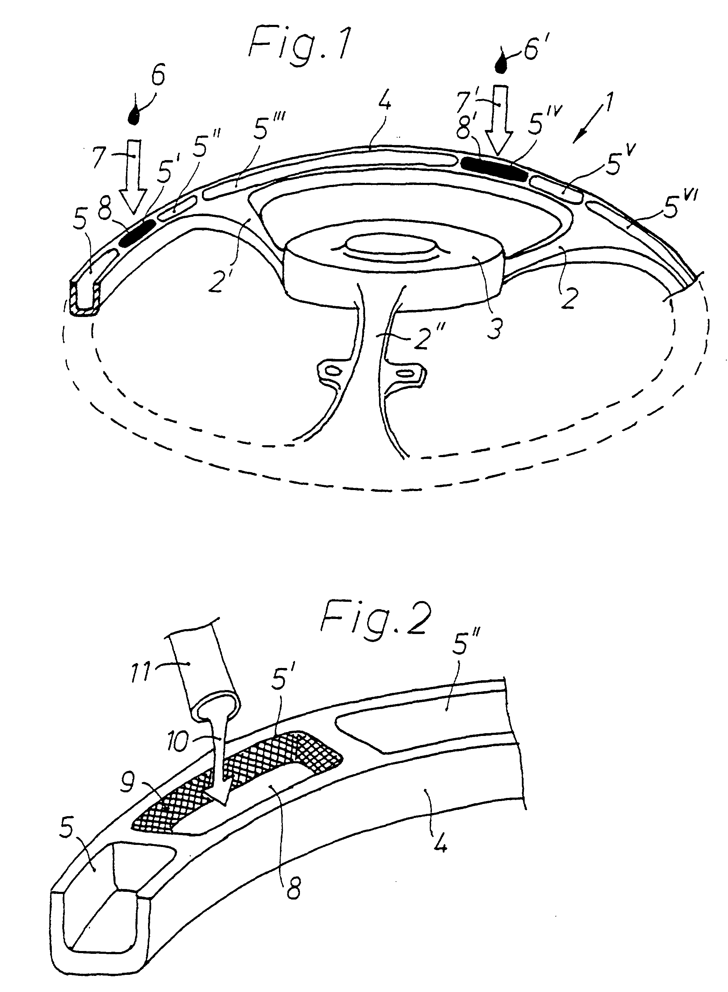

Das in Fig. 1 unverkleidet dargestellte Lenkrad 1 eines Kraftfahrzeugs weist mehrere Speichen 2, 2', 2'' auf, die eine zentrale Nabe 3 mit einem äußeren Lenkradkranz 4 verbinden. Am Umfang des Lenkradkranzes 4 sind mehrere Ausnehmungen 5, 5', 5'', 5''', 5^{IV}, 5^{V}, 5^{VI} ausgebildet, die eine unterschiedliche Größe aufweisen, jedoch symmetrisch zur Lenkradachse angeordnet sind. Die Ausnehmungen 5', 5'', 5^{IV} und 5^{V} weisen eine gleiche Größe auf. Die Ausnehmungen 5, 5''', 5^{VI} sind mit einer gleichen, jedoch von den anderen Ausnehmungen 5, 5'', 5^{IV}, 5^{V} unterschiedlichen Größe ausgebildet. Durch die Tropfen 6, 6' und die Pfeile 7, 7' ist angedeutet, daß in die Ausnehmungen 5' und 5^{IV} ein verflüssigtes Metall, beispielsweise Blei, eingefüllt ist, um das Lenkrad-Trägheitsmoment um die Lenkradachse auf einen vorgegebenen Wert einzustellen. Das Einfüllen der flüssigen Zusatzmasse 8, 8' in die Ausnehmungen 5' und 5^{IV} bzw. in die anderen Ausnehmungen ist dadurch erleichtert, daß die Ausnehmungen 5, 5', 5'', 5''', 5^{IV}, 5^{V}, 5^{VI} jeweils in Achsrichtung des Lenkrades 1 nach einer Seite offen ausgebildet sind. Das Lenkrad 1 ist ein Gußteil, das im wesentlichen aus dem Werkstoff Aluminium oder Magnesium gebildet ist. Das Material des Lenkradkranzes 4 weist einen höheren Schmelzpunkt als das in die Ausnehmungen 5', 5^{IV} eingefüllte Material auf, das bei dieser Ausführung Blei ist.

In Fig. 2 ist ein Bereich des Lenkradkranzes 4 dargestellt, der die Ausnehmung 5' aufweist. Wie zu erkennen ist, weisen die Umfangswände der Ausnehmung 5' Vertiefungen auf, die durch eine Riffelung 9 gebildet ist. Durch die Riffelung 9 hintergreift die in die Ausnehmung 5' eingebrachte Zusatzmasse 8 nach der Abkühlung Bereiche der Umfangswände bzw. der Riffelung 9 und ist dadurch auch dann in der Ausnehmung 5' ausreichend festgehalten, wenn die Ausnehmung 5' lediglich teilweise mit Blei oder einem anderen Material gefüllt ist. Durch den Pfeil 10 und das Einfüllrohr 11 ist angedeutet, daß die Zusatzmasse 8 nach einer Erwärmung flüssig in die Ausnehmung 5' eingefüllt wird. Sind alle Zusatzmassen in vorgegebene Ausnehmungen eingefüllt und dadurch ein vorgegebenes Lenkrad-Trägheitsmoment um die Lenkradachse erreicht, kann das Lenkrad bzw. der Lenkradkranz mit einer Verkleidung ummantelt werden. Mit dieser Vorgehensweise können beispielsweise für verschiedene Fahrzeugtypen vorgesehene Lenkräder auf ein Grundgerüst aufbauen, das je nach Fahrzeugtyp durch das Einbringen von wenigstens einer Zusatzmasse in eine Ausnehmung auf ein gewünschtes Lenkrad-Trägheitsmoment um die Lenkradachse einzustellen ist. Der Fertigungsaufwand für die Lenkräder ist wesentlich vereinfacht, da beispielsweise eine Schäumform zur Ummantelung der verschiedenen Lenkräder gemeinsam verwendbar ist.

Die Erfindung ist auch von dem Ausführungsbeispiel abweichend ausführbar. Sind mehrere Ausnehmungen am Lenkradkranz und/ oder an wenigstens einer Speiche oder der Nabe des Lenkrades vorgesehen, so können die Ausnehmungen eine unterschiedliche Größe aufweisen und nebeneinander oder mit gleichen oder unterschiedlichen Abständen voneinander ausgebildet sein. Die Öffnungen der Ausnehmungen können in unterschiedliche Richtungen ausgebildet sein. In der betreffenden Ausnehmung kann eine Zusatzmasse auch auf andere Weise, beispielsweise durch Klemmwirkung oder über eine Rast- oder Arretiereinrichtung festgehalten sein. Das Lenkrad kann aus mehreren Einzelteilen bestehen, die beispielsweise durch einen Verbundguß miteinander verbunden sind. Das Lenkrad kann auch lediglich teilweise, beispielsweise in den die Ausnehmungen aufweisenden Bereichen ummantelt sein.

### [Bezugszeichenliste]

| Teil | Bezeichnung |
|---|---|
| 1 | Lenkrad |
| 2, 2', 2'' | Speiche |
| 3 | Nabe |
| 4 | Lenkradkranz |
| 5, 5', 5'', 5''', 5^{IV}, 5^{V}, 5^{VI} | Ausnehmung |
| 6, 6' | Tropfen |
| 7, 7' | Pfeil |
| 8, 8' | Zusatzmasse |
| 9 | Riffelung |
| 10 | Pfeil |
| 11 | Einfüllrohr |

## Patentansprüche

1. Lenkrad, mit wenigstens einer Speiche, die eine Nabe mit einem äußeren Lenkradkranz verbindet und einer mit der Speiche und/oder dem Lenkradkranz verbundenen Zusatzmasse zur Einstellung des Lenkrad-Trägheitsmoments um die Lenkradachse, wobei die Zusatzmasse (8, 8') in eine bei unverkleidetem Lenkrad (1) nach außen offene Ausnehmung (5, 5', 5'', 5''', 5^{IV}, 5^{V}, 5^{VI}) insbesondere am Lenkradkranz (4) eingebracht und in der Ausnehmung (5, 5', 5'', 5''', 5^{IV}, 5^{V}, 5^{VI}) befestigt werden kann
dadurch gekennzeichnet, daß an einem Umfangsbereich des Lenkradkranzes (4) mehrere Ausnehmungen (5, 5', 5'', 5''', 5^{IV}, 5^{V}, 5^{VI}) nebeneinander oder mit gleichen oder ungleichen Abständen voneinander ausgebildet sind.

2. Lenkrad nach Anspruch 1, dadurch gekennzeichnet, daß alle Ausnehmungen (5, 5', 5'', 5''', 5^{IV}, 5^{V}, 5^{VI}) nach einer Seite offen ausgebildet sind.

3. Lenkrad nach einem der Ansprüche 1 bis 2, dadurch gekennzeichnet, daß die Zusatzmasse (8, 8') ein flüssig in die Ausnehmung (5', 5^{IV}) eingegossenes Metall ist und das die Ausnehmung bildende Material einen höheren Schmelzpunkt als das Metall hat.

4. Lenkrad nach einem der Ansprüche 1 bis 3, dadurch gekennzeichnet, daß zumindest eine Innenseite der Ausnehmung (5') Vertiefungen zum form- und/oder kraftschlüssigen Festhalten der in die Ausnehmung (5') eingebrachten und gegebenenfalls nach einer Erwärmung abgekühlten Zusatzmasse aufweist.

5. Lenkrad nach Anspruch 4, dadurch gekennzeichnet, daß die Vertiefungen durch Rippen und/oder eine Riffelung (9) oder dergleichen gebildet sind.

6. Lenkrad nach einem der Ansprüche 1 bis 5, dadurch gekennzeichnet, daß das Lenkrad (1) ein Gußteil ist.

7. Lenkrad nach einem der Ansprüche 1 bis 6, dadurch gekennzeichnet, daß das Lenkrad aus mehreren Einzelteilen gebildet ist, die durch einen Verbundguß miteinander verbunden sind.

8. Lenkrad nach Anspruch 6 oder 7, dadurch gekennzeichnet, daß das Gußteil im wesentlichen aus dem Werkstoff Aluminium oder Magnesium gebildet ist.

9. Lenkrad nach einem der Ansprüche 1 bis 8, dadurch gekennzeichnet, daß zumindest der die Ausnehmung (5, 5', 5'', 5''', 5^{IV}, 5^{V}, 5^{VI}) aufweisende Bereich des Lenkrades (1) nach dem Einbringen der Zusatzmasse (8, 8') in die Ausnehmung (5', 5^{IV}) ummantelt ist.

## Revendications

1. Volant, présentant au moins une branche reliant le moyeu à la jante du volant et, reliée à la branche et/ou à la jante, une masse additionnelle servant à régler le moment d'inertie autour de l'axe du volant, cette masse additionnelle (8, 8') pouvant être introduite dans un évidement (5, 5', 5'', 5''', 5^{IV}, 5^{V}, 5^{VI}) ouvert vers l'extérieur, pratiqué dans le volant (1) non recouvert, en particulier dans la jante et pouvant être fixée dans cet évidement,
caractérisé en ce que
sur la périphérie de la jante (4) du volant sont disposés plusieurs évidements (5, 5', 5'', 5''', 5^{IV}, 5^{V}, 5^{VI}), côte à côte ou espacés également ou inégalement entre eux.

2. Volant selon la revendication 1,
caractérisé en ce que
tous les évidements (5, 5', 5'', 5''', 5^{IV}, 5^{V}, 5^{VI}) sont ouverts sur un même côté.

3. Volant selon la revendication 1 ou 2,
caractérisé en ce que
la masse additionnelle (8, 8') est faite d'un métal introduit à l'état liquide dans l'évidement (5', 5^{IV}) pratiqué dans un matériau ayant un point de fusion plus élevé que le métal coulé.

4. Volant selon l'une quelconque des revendications 1 à 3,
caractérisé en ce qu'
au moins une face intérieure de l'évidement (5') présente des creux pour fixer par adhérence et/ou combinaison de formes la masse additionnelle introduite dans l'évidement (5') et éventuellement refroidie après avoir été chauffée.

5. Volant selon la revendication 4,
caractérisé en ce que
les creux sont formés par des nervures et/ou une cannelure (9) ou similaire.

6. Volant selon l'une quelconque des revendications 1 à 5,
caractérisé en ce que
le volant (1) est une pièce coulée.

7. Volant selon l'une quelconque des revendications 1 à 6,
caractérisé en ce que
le volant est constitué de plusieurs parties réunies par une coulée de liaison.

8. Volant selon la revendication 6 ou 7,
caractérisé en ce que
la pièce coulée est essentiellement en aluminium ou en magnésium.

9. Volant selon l'une quelconque des revendications 1 à 8,
caractérisé en ce qu'
au moins la zone du volant (1) qui présente l'évidement (5, 5', 5'', 5''', 5^{IV}, 5^{V}, 5^{VI}) est enveloppée d'un revêtement, après installation de la masse additionnelle (8, 8') dans l'évidement (5', 5^{IV}).

## Claims

1. A steering wheel, with at least one spoke, which joins a hub to an outer steering wheel rim and an added mass joined to the spoke and/or the rim of the steering wheel for setting up the moment of inertia of the steering wheel about the steering wheel axis, in which the added mass (8, 8') is put into a cut-out (5, 5', 5'' 5''', 5^{IV}, 5^{V}, 5^{VI}) which with an uncovered steering wheel (1) is open to the outside, especially in the rim (4) of the steering wheel, and can be fastened in the cut-out (5, 5', 5" 5''', 5^{IV}, 5^{V}, 5^{VI}),
characterised in that several cut-outs (5, 5', 5'' 5''', 5^{IV}, 5^{V}, 5^{VI}) are configured adjacent to each other or with the same or unequal separations from each other in the region of the circumference of the steering wheel rim (4).

2. A steering wheel according to Claim 1, characterised in that all the cut-outs (5, 5', 5" 5''', 5^{IV}, 5^{V}, 5^{VI}) are formed open to one side.

3. A steering wheel according to Claim 1 or Claim 2, characterised in that the added mass (8, 8') is a molten metal poured into the cut-out (5', 5^{IV}) and that the material forming the cut-out has a higher melting point than the metal.

4. A steering wheel according to any one of the Claims 1 to 3, characterised in that at least one internal side of the cut-out (5') has depressions for the positive engagement and/or frictional retention of the added mass introduced into the cut-out (5') and possibly cooled after heating.

5. A steering wheel according to Claim 4, characterised in that the depressions are formed by ribbing and/or grooving (9) or similar.

6. A steering wheel according to any one of the Claims 1 to 5, characterised in that the steering wheel (1) is a cast part.

7. A steering wheel according to any one of the Claims 1 to 6, characterised in that the steering wheel (1) is formed from several individual components, which are joined together by an amalgamating casting.

8. A steering wheel according to Claim 6 or Claim 7, characterised in that the cast part is essentially formed from aluminium or magnesium material.

9. A steering wheel according to any one of the Claims 1 to 8, characterised in that at least the region of the steering wheel (1) including the cut-outs (5, 5', 5" 5''', 5^{IV}, 5^{V}, 5^{VI}) is covered after the introduction of the added mass (8, 8') into the cut-outs (5, 5').
